# EUROPÄISCHE PATENTSCHRIFT

(11) **EP 2 774 255 B1**
(45) Veröffentlichungstag und Bekanntmachung des Hinweises auf die Patenterteilung: **09.12.2020**
(21) Anmeldenummer: 12772274.2
(22) Anmeldetag: 02.10.2012
(51) Int. Cl.: H02M 3/158

(54) **SPANNUNGSWANDLER MIT EINER ERSTEN PARALLELSCHALTUNG**
VOLTAGE CONVERTER HAVING A FIRST PARALLEL CIRCUIT
CONVERTISSEUR DE TENSION COMPORTANT UN PREMIER CIRCUIT PARALLÈLE

(30) Priorität: 02.11.2011 DE 102011085559
(43) Veröffentlichungstag der Anmeldung: 10.09.2014
(73) Patentinhaber: Robert Bosch GmbH, 70442 Stuttgart (DE)
(72) Erfinder: KRAUTER, Gisbert, 71737 Kirchberg (DE)
(86) Internationale Anmeldenummer: PCT/EP2012/069393
(87) Internationale Veröffentlichungsnummer: WO 2013/064318

(56) Entgegenhaltungen:
- EP-A1- 1 971 018
- WO-A2-2011/027300
- DE-A1-102008 063 201
- JP-A- 2009 017 646
- US-A1- 2007 029 881
- US-A1- 2009 273 235

## Beschreibung

Die vorliegende Erfindung betrifft einen Spannungswandler umfassend eine erste Parallelschaltung eines ersten Kondensators mit einer Zahl von N > 1 parallel geschalteten Stellern mit N-Eingangsspannungen und N-Eingangsströmen. Ein zweiter Kondensator ist mit der ersten Parallelschaltung in Reihe geschaltet, wobei die Kondensatorenspannung des zweiten Kondensators kleiner oder gleich der kleinsten Eingangsspannung der Steller ist.

### Stand der Technik

In vielen Anwendungen müssen Spannungen gewandelt werden, wenn die Spannungsquelle und die Spannungssenke unterschiedliche Spannungen aufweisen.

Dazu werden vielfach Spannungswandler eingesetzt, um unterschiedliche Spannungsquellen auf ein gemeinsames Potenzial anzugleichen.

Bei vielen Anwendungen, beispielsweise bei der Stromerzeugung aus Photovoltaik, sind die Eingangsspannungen ähnlich hoch, aber nicht gleich. Dennoch werden üblicherweise Steller eingesetzt, die unabhängig betrieben werden können und daher für den gesamten Eingangsspannungsbereich auszulegen sind. Da jede Quelle ihren eigenen Steller benötigt, um den Spannungs- und Strombereich der Quelle anzupassen, sind der konstruktive Aufwand für die Steller und damit die Gesamtkosten sowie die Verlustleistung des Gerätes entsprechend hoch.

JP2009017646 offenbart eine Stromversorgung mit mehreren parallelgeschalteten Gleichspannungsquellen, die jeweils mit einem Abwärtswandler parallel geschaltet sind. Eine Induktivität ist zu dieser Parallelschaltung in Reihe geschaltet und verbindet diese gemeinsam mit einer Diode mit einem Inverter.

Das Dokument EP 1 971 018 A1 offenbart einen Spannungswandler mit einem Gleichspannungswandler, dem ein erster Kondensator ausgangsseitig parallel geschaltet ist, und einen weiteren Kondensator, der zu dem ersten Kondensator in Reihe geschaltet ist. Die Spannung am zweiten Kondensator kann durch einen Wandler eingestellt werden, beispielsweise auf einen Wert, der gleich der Eingangsspannung ist.

Die US2009273235A1 zeigt eine Parallelschaltung aus parallel geschalteten Wandlern und einem Kondensator.

### Offenbarung der Erfindung

Die Erfindung ist in den unabhängigen Ansprüchen definiert.

Der erfindungsgemäße Spannungswandler hat durch die Parallelschaltung den Vorteil, dass alle Elemente den gleichen Potenzialunterschied haben. Zudem können bei einer Parallelschaltung vorteilhaft einzelne Elemente hinzugefügt oder entfernt werden, ohne dass die anderen Elemente ausfallen. Die Reihenschaltung ermöglicht zudem vorteilhaft, dass nur der Teil der Eingangsspannung gewandelt werden muss, welcher zwischen den Quellen unterschiedlich ist. Der Teil der Spannung, der bei allen Quellen gleich ist, braucht nicht gewandelt zu werden.

In einer bevorzugten Ausgestaltung der Erfindung ist vorgesehen, dass der Spannungswandler einen Regler derart aufweist, dass im Mittel die Summe der Eingangsströme der Steller gleich der Summe der Ausgangsströme des Spannungswandlers und gleichzeitig die mittlere Eingangsleistung der Spannungswandler gleich der mittleren Ausgangsleistung des Spannungswandlers ist.

In einer weiteren bevorzugten Ausgestaltung der Erfindung ist vorgesehen, dass der Spannungswandler einen Regler derart aufweist, dass im Mittel die Energie in beiden Kondensatoren konstant bleibt.

Durch diese beiden Ausgestaltungen ist vorteilhaft, dass dadurch die Eingangsbeschaltung des Spannungswandlers verbessert wird.

In einer weiteren bevorzugten Ausgestaltung der Erfindung ist vorgesehen, dass die Kondensatorenspannung des ersten Kondensators mindestens so groß ist wie die größte Eingangsspannung abzüglich der Kondensatorspannung des zweiten Kondensators.

Durch diese Ausgestaltung ermöglicht der erfindungsgemäße Spannungswandler sehr vorteilhaft, dass sämtliche Steller nur mit Bauteilen , welche es für die Spannung U_{C1} und nicht mehr für die gesamte Zwischenkreisspannung U_{ZK1}=U_{C1}+U_{C2} gibt, ausgelegt sein müssen.

In einer weiteren bevorzugten Ausgestaltung der Erfindung ist vorgesehen, dass der Spannungswandler mit einer Ausgangsstufe über einen weiteren Steller mit der Reihenschaltung aus zweitem Kondensator und erster Parallelschaltung verbindbar ist.

In einer weiteren bevorzugten Ausgestaltung der Erfindung ist vorgesehen, dass ein weiterer Steller derart mit der Reihenschaltung aus zweitem Kondensator und erster Parallelschaltung verbunden ist, dass in einer ersten Konfiguration die Stellerspannung der Spannung über dem zweiten Kondensator entspricht und in einer zweiten Konfiguration der Spannung über der Reihenschaltung entspricht.

Der erfindungsgemäße Spannungswandler hat den Vorteil, dass durch diese Konfiguration der Steller der konstruktive Aufwand für die Steller und damit die Gesamtkosten des Gerätes/der Anlage reduziert werden.

In einer weiteren bevorzugten Ausgestaltung der Erfindung ist vorgesehen, dass die Eingangsströme jeweils über eine Induktivität, sowie eine Diode und/oder einen parallel geschalteten Schalter in den Spannungswandler eingekoppelt werden.

Hierdurch ist vorteilhaft, dass durch die Parallelschaltung an allen Elementen nur der Potentialunterschied und nicht das Gesamtpotential anliegt.

In einer weiteren bevorzugten Ausgestaltung der Erfindung ist vorgesehen, dass die Steller als Aufwärtssteller und/oder Abwärtssteller ausgebildet sind.

Dadurch wird vorteilhaft eine höhere Ausgangsspannung erzeugt und/oder die Ausgangsspannung ist am Eingang geringer als die konstante Spannungsquelle und dadurch wird der Schalter periodisch geöffnet und geschlossen. Die Steller könnten auch so ausgeführt werden, dass sie Leistung in beide Richtungen wandeln können oder nur in Rückwärtsrichtung. Der Vorteil dabei wäre, dass die Eingangssteller zu Ausgangsstellern und die Ausgangssteller zu Eingangsstellern umfunktioniert wären.

Erfindungsgemäß ist mindestens ein Steller als Zweiquadrantensteller derart ausgeführt, dass der Strom umkehrbar ist und mindestens ein Eingangssteller als Ausgangssteller arbeitet.

In einer weiteren bevorzugten Ausgestaltung der Erfindung ist vorgesehen, dass die Ausgangsspannung von den Eingangsgrößen abhängig ist.

Dadurch wird vorteilhaft ein zeitlich gleichmäßig fließender Strom erzeugt oder es ist eine Variation des Ausgangsstromes möglich.

In einer weiteren bevorzugten Ausgestaltung der Erfindung ist vorgesehen, dass die Ausgangsspannung derart variiert wird, dass bei einer Reihenschaltung mit einer Last, welche eine variable Eingangsspannung benötigt, die Ausgangsspannung der variablen Eingangsspannung entspricht.

Nach der Erfindung zeigt der Spannungswandler ein Verfahren zur Spannungswandlung, das die Schritte des Bereitstellens einer ersten Parallelschaltung eines ersten Kondensators mit einer Zahl von N > 1 parallel geschalteten Stellern mit N-Eingangsspannungen und N-Eingangsströmen und In-Reihe-Schalten eines zweiten Kondensators mit der ersten Parallelschaltung umfasst, wobei die zweite Kondensatorenspannung kleiner oder gleich der kleinsten Eingangsspannung der Steller ist und Wandeln des differentiellen Spannungsunterschiedes der N-Eingangsspannungen.

In einer weiteren bevorzugten Ausgestaltung der Erfindung ist ein Verfahren zur Spannungsumwandlung vorgesehen, das den Schritt des Auslegens der Bauteile der ersten Parallelschaltung auf die erste Kondensatorspannung umfasst.

Weiter ermöglicht das erfindungsgemäße Verfahren zur Spannungsumwandlung durch die beiden oben beschriebenen Ausgestaltungen sehr vorteilhaft, zum einen bei kleinen Ausgangsspannungen des Stellers die Energie im zweiten Kondensator zu nutzen, während die Eingangssteller den ersten Kondensator aufladen. Anschließend kann dann im nächsten Zeitabschnitt, bei größerer Ausgangsspannung, zusätzlich die Energie im ersten Kondensator genutzt werden. Ein weiterer Vorteil ist, dass durch diese Konfiguration der Steller der konstruktive Aufwand für die Steller und damit die Gesamtkosten des Gerätes/der Anlage reduziert werden und gleichzeitig die Effizienz erhöht wird.

Diese Erfindung bietet sich vor allem für den Einsatz in Photovoltaik-Wechselrichtern, vorzugsweise in ein- und dreiphasigen Multistring-Photovoltaik-Wechselrichtern an, bei denen es auf Produktkosten ankommt.

Vorteilhafte Weiterbildungen der Erfindung sind in den Unteransprüchen angegeben und in der Beschreibung beschrieben.

### Zeichnungen

Ausführungsbeispiele der Erfindung werden anhand der Zeichnungen und der nachfolgenden Beschreibung näher erläutert. Es zeigen:
Figur 1 ein Prinzipschaltbild mit zwei Eingangsströmen und zwei Ausgangsströmen sowie zwei Ausgangsspannungen,
Figur 2 ein Prinzipschaltbild mit einer Ausgangsspannung und einem Ausgangsstrom, und
Figur 3 ein Prinzipschaltbild mit einem nachgeschalteten Steller, welcher aus zwei verschiedenen Ausgangsspannungen gespeist wird.

### Ausführungsformen der Erfindung

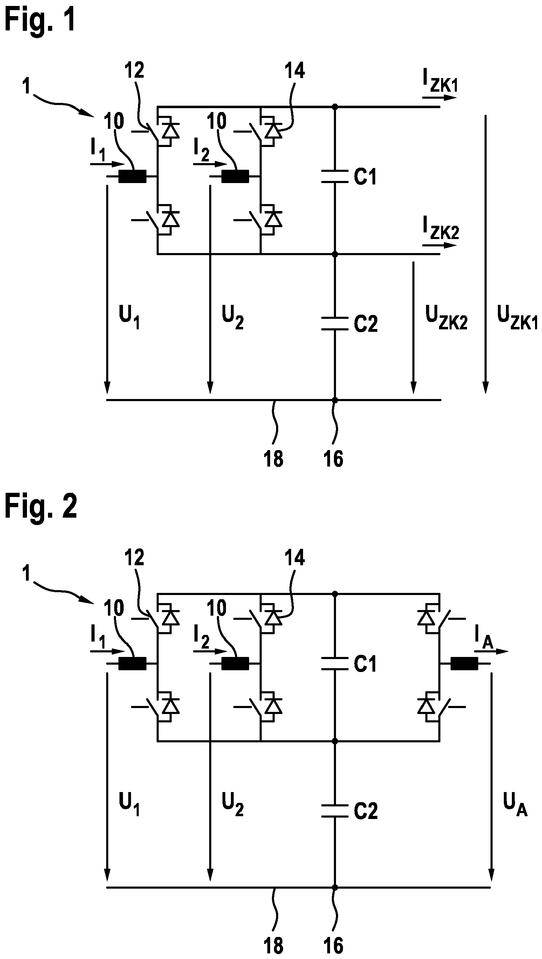

Figur 1 zeigt ein Prinzipschaltbild eines Spannungswandlers 1. Die Figur 1 ist eine Ausführungsform der erfindungsgemäßen Eingangsbeschaltung eines Spannungswandlers 1. Der Spannungswandler 1 weist einen ersten Eingansstrom I₁ mit einer ersten Induktivität 10 auf und die erste Induktivität 10 ist durch eine Verbindungsleitung 18 mit zwei Dioden 14 und zwei Schaltern 12 verbunden. Je nach Betriebsart kann auch ein Schalter und/oder eine Diode entfallen. Zudem weist der Spannungswandler 1 einen zweiten Eingangsstrom I₂ mit einer zweiten Induktivität 10 auf und die zweite Induktivität 10 ist ebenfalls durch eine Verbindungsleitung 18 mit zwei Dioden 14 und zwei Schaltern 12 verbunden. Der Spannungswandler 1 umfasst neben den Eingangsströmen I₁ und I₂ zudem die Eingangsspannungen U₁ und U₂. Die Eingangsspannung ist die elektrische Spannung, die am Eingang der elektrischen Schaltung von einer externen Quelle bereitgestellt wird. Der Kondensator C1 ist durch eine Verbindungsstelle 16 mit dem Kondensator C2 verbunden. Die Kondensatoren C1 und C2 speichern dabei die elektrische Ladung und die damit zusammenhängende Energie. Diese Kondensatoren wirken Spannungsänderungen aufgrund ihrer Ladungsspeicherfähigkeit entgegen. Der Spannungswandler 1 besteht aus zumindest zwei Eingangsströmen I₁ und I₂, die zu einer Anordnung mehrerer an einen Kondensator C1 parallel geschalteten Steller und einen Kondensator C2 in Reihe geschaltet werden. Die Kondensatorspannung U_{C2} kann dabei maximal so groß sein wie die kleinste Eingangsspannung U₁ bis Uₙ. Darüber hinaus muss die Kondensatorspannung U_{C1} mindestens so groß sein wie die größte Eingangsspannung U₁ bis Uₙ abzüglich der Spannung U_{C2}. Daraus lässt sich ableiten, dass sämtliche Steller nur mit Bauteilen , welche es für die Spannung U_{C1} = U_{ZK1} - U_{ZK2} und nicht mehr für die gesamte Zwischenkreisspannung U_{ZK1} = U_{C1} + U_{C2} gibt, ausgelegt sein müssen. Die Steller sind parallel geschaltet, da alle gleichnamigen Pole jeweils miteinander verbunden sind. Bei einer Parallelschaltung haben alle Elemente den gleichen Potenzialunterschied. Zudem können bei einer Parallelschaltung einzelne Elemente hinzugefügt oder entfernt werden, ohne dass die anderen Elemente ausfallen. Die Reihenschaltung oder Hintereinanderschaltung zeichnet sich dadurch aus, dass die Verbindung keine Abzweigung aufweist. Die Reihenschaltung ermöglicht zudem, bei richtiger Polung höhere Gesamtspannungen zu erzeugen.

Weiterhin sorgt ein Regler dafür, dass im Mittel die Summe der Eingangsströme gleich der Summe der Ausgangsströme und gleichzeitig die mittlere Eingangsleistung gleich der mittleren Ausgangsleistung ist, also I₁+I₂+...+Iₙ = I_{ZK1}+I_{ZK2} sowie U₁*I₁+U₂*I₂+...+Uₙ*Iₙ = U_{ZK1}*I_{ZK1}+U_{ZK2}*I_{ZK2}.

Eine erweiterte Schaltung eines Spannungswandlers 1 ist in Figur 2 dargestellt. Alle unverändert beibehaltenen Schaltungsteile sind mit gleichen Bezugszeichen wie in Figur 1 versehen. Die Figur 2 unterscheidet sich von der Figur 1 dahin gehend, dass bei der Figur 2 über einen Ausgangsstrom I_{A} eine beliebige Ausgangsstufe an dem Zweilevel-Zwischenkreis angeschlossen werden kann. Der Zweilevel-Zwischenkreis dient dabei als Energiespeicher. Zudem weist die Figur 2 eine Ausgangsspannung U_{A} auf. Die Ausgangsspannung U_{A} kann zwischen der Spannung U_{ZK2} und U_{ZK1} variiert werden, allerdings gilt im Mittel: U₁*I₁+U₂*I₂+...+Uₙ*Iₙ = U_{A} * I_{A}.

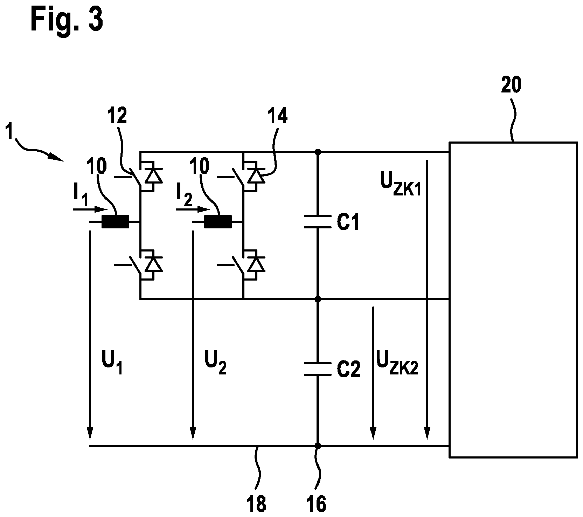

In Figur 3 ist eine weitere Ausführungsform der erfindungsgemäßen Eingangsbeschaltung eines Spannungswandlers 1 gezeigt. Bei dieser Ausführungsform sind nur zwei selektive Schaltungen verwendet. Die Reihenschaltung einer größeren Anzahl derartiger selektiver Schaltungen ist jedoch ohne weiteres möglich. Auch hier werden unverändert beibehaltene Schaltungsteile mit gleichen Bezugszeichen wie in Figur 1 versehen. In der Figur 3 wird die Ausgangsstufe so erweitert, dass diese aus den zwei verschiedenen Eingangsspannungen U_{ZK1} und U_{ZK2} wählen kann. Bei einer zeitlich veränderlichen Ausgangsspannung ist es so möglich, bei kleinen Ausgangsspannungen des Stellers 20 die Energie in C2 zu nutzen, während die Eingangsströme den Kondensator C1 aufladen. Anschließend kann im nächsten Zeitabschnitt, bei größerer Ausgangsspannung, zusätzlich die Energie in C1 genutzt werden. Diese Konfiguration des Stellers 20 in Figur 3 bewirkt, dass der Steller 20 nur den differentiellen Spannungsunterschied wandelt, nicht aber den gemeinsamen Teil. Damit lassen sich der konstruktive Aufwand für die Steller und damit die Gesamtkosten des Gerätes/der Anlage reduzieren.

## Patentansprüche

1. Spannungswandler (1) umfassend:
eine erste Parallelschaltung eines ersten Kondensators (C1) mit einer Zahl von N > 1 parallel geschalteten Stellern mit N-Eingangsspannungen (U₁... Uₙ) und N-Eingangsströmen (I₁ ... Iₙ), wobei die Steller als Eingangssteller arbeiten,
**dadurch gekennzeichnet, dass**
ein zweiter Kondensator (C2) mit der ersten Parallelschaltung in Reihe geschaltet ist, wobei eine am zweiten Kondensator (C2) anliegende Kondensatorenspannung (U_{C2}) kleiner oder gleich der kleinsten Eingangsspannung (U₁... Uₙ) der Steller ist, und mindestens ein Steller als Zweiquadrantensteller derart ausgeführt ist, dass der Strom umkehrbar ist und mindestens ein Eingangssteller als Ausgangssteller arbeitet.

2. Spannungswandler (1) nach zumindest einem der vorhergehenden Ansprüche, wobei eine Ausgangsstufe über einen weiteren Steller mit der Reihenschaltung aus zweitem Kondensator (C2) und erster Parallelschaltung verbindbar ist.

3. Spannungswandler (1) nach zumindest einem der vorhergehenden Ansprüche, wobei ein weiterer Steller derart mit der Reihenschaltung aus zweitem Kondensator (C2) und erster Parallelschaltung verbunden ist, dass in einer ersten Konfiguration die Stellerspannung der Spannung über dem zweiten Kondensator (C2) entspricht und in einer zweiten Konfiguration der Spannung über der Reihenschaltung entspricht.

4. Spannungswandler (1) nach einem der vorhergehenden Ansprüche, wobei die Eingangsströme (I₁ ... Iₙ) jeweils über eine Induktivität (10), sowie eine Diode (14) und/oder einen parallel geschalteten Schalter (12) in den Spannungswandler (1) eingekoppelt werden.

5. Spannungswandler (1) nach zumindest einem der vorhergehenden Ansprüche, wobei die Steller als Aufwärtssteller und/oder Abwärtssteller ausgebildet sind.

6. Spannungswandler (1) nach zumindest einem der vorhergehenden Ansprüche, wobei die Ausgangsspannung (U_{A}) von den Eingangsgrößen abhängig ist.

7. Verfahren zur Spannungswandlung, umfassend die Schritte:
Bereitstellen einer ersten Parallelschaltung eines ersten Kondensators (C1) mit einer Zahl von N > 1 parallel geschalteten Stellern mit N-Eingangsspannungen (U₁, ..., Uₙ) und N-Eingangsströmen (I₁, ... Iₙ), wobei die Steller als Eingangssteller arbeiten, **gekennzeichnet durch** die Schritte: In-Reihe-Schalten eines zweiten Kondensators (C2) mit der ersten Parallelschaltung, wobei die zweite Kondensatorenspannung (U_{C2}) kleiner oder gleich der kleinsten Eingangsspannung (U₁, ..., Uₙ) der Steller ist, Wandeln des differentiellen Spannungsunterschiedes der N-Eingangsspannungen (U₁, ..., Uₙ), Ausführen mindestens eines Stellers als Zweiquadrantensteller derart, dass der Strom umkehrbar ist und mindestens ein Eingangssteller als Ausgangssteller arbeitet.

8. Verfahren zur Spannungswandlung nach Anspruch 7, ferner umfassend den Schritt des Auslegens der Bauteile der ersten Parallelschaltung auf die erste Kondensatorspannung (U_{C1} = U_{ZK1} - U_{ZK2}).

## Claims

1. Voltage transformer (1) comprising:
a first parallel circuit comprising a first capacitor (C1) with a number of N: > 1 parallel-connected converters with N input voltages (U₁...Uₙ) and N input currents (I₁...Iₙ), wherein the converters operate as input converters,
**characterized in that**
a second capacitor (C2) is connected in series with the first parallel circuit, wherein a capacitor voltage (U_{C2}) applied to the second capacitor (C2) is less than or equal to the lowest input voltage (U₁...Uₙ) of the converters, and at least one converter is in the form of a two-quadrant converter in such a manner that the current is reversible and at least one input converter operates as an output converter.

2. Voltage transformer (1) according to at least one of the preceding claims, wherein an output stage can be connected to the series circuit comprising the second capacitor (C2) and the first parallel circuit via a further converter.

3. Voltage transformer (1) according to at least one of the preceding claims, wherein a further converter is connected to the series circuit comprising the second capacitor (C2) and the first parallel circuit in such a manner that, in a first configuration, the converter voltage corresponds to the voltage across the second capacitor (C2) and, in a second configuration, corresponds to the voltage across the series circuit.

4. Voltage transformer (1) according to one of the preceding claims, wherein the input currents (I₁...Iₙ) are each injected into the voltage transformer (1) via an inductance (10) and a diode (14) and/or a switch (12) connected in parallel.

5. Voltage transformer (1) according to at least one of the preceding claims, wherein the converters are in the form of step-up converters and/or step-down converters.

6. Voltage transformer (1) according to at least one of the preceding claims, wherein the output voltage (U_{A}) is dependent on the input variables.

7. Voltage transformation method comprising the steps of:
providing a first parallel circuit comprising a first capacitor (C1) with a number of N > 1 parallel-connected converters with N input voltages (U₁, ..., Uₙ) and N input currents (I₁, ..., Iₙ), wherein the converters operate as input converters, **characterized by** the steps of:
connecting a second capacitor (C2) in series with the first parallel circuit, wherein the second capacitor voltage (U_{C2}) is less than or equal to the lowest input voltage (U₁, ..., Uₙ) of the converters, converting the differential voltage difference of the N input voltages (U₁, ..., Uₙ),
configuring at least one converter as a two-quadrant converter in such a manner that the current is reversible and at least one input converter operates as an output converter.

8. Voltage transformation method according to Claim 7, also comprising the step of designing the components of the first parallel circuit for the first capacitor voltage (U_{C1}=U_{ZK1}-U_{ZK2}).

## Revendications

1. Convertisseur de tension (1) comprenant :
un premier circuit parallèle d'un premier condensateur (C1) avec un nombre N > 1 de régulateurs commutés en parallèle avec N tensions d'entrée (U₁... Uₙ) et N intensités d'entrée (I₁... Iₙ), dans lequel les régulateurs fonctionnent comme régulateurs d'entrée,
**caractérisé en ce qu'**un deuxième condensateur (C2) est commuté en série avec le premier circuit parallèle, dans lequel une tension de condensateur (U_{C2}) appliquée aux bornes du deuxième condensateur (C2) est inférieure ou égale à la plus faible tension d'entrée (U₁... Uₙ) des régulateurs, et au moins un régulateur est réalisé comme hacheur deux quadrants de telle sorte que le courant est inversable et au moins un régulateur d'entrée fonctionne comme régulateur de sortie.

2. Convertisseur de tension (1) selon au moins une des revendications précédentes, dans lequel un étage de sortie peut être connecté au circuit série constitué du deuxième condensateur (C2) et du premier circuit parallèle, par le biais d'un régulateur supplémentaire.

3. Convertisseur de tension (1) selon au moins une des revendications précédentes, dans lequel un régulateur supplémentaire est connecté au circuit série constitué du deuxième condensateur (C2) et du premier circuit parallèle de telle sorte que la tension de régulateur correspond dans une première configuration à la tension aux bornes du deuxième condensateur (C2) et correspond dans une deuxième configuration à la tension aux bornes du circuit série.

4. Convertisseur de tension (1) selon au moins une des revendications précédentes, dans lequel les intensités d'entrée (I₁... Iₙ) sont respectivement couplées dans le convertisseur de tension (1) par le biais d'une inductance (10), ainsi que d'une diode (14) et/ou un commutateur (12) commuté en parallèle.

5. Convertisseur de tension (1) selon au moins une des revendications précédentes, dans lequel les régulateurs sont réalisés comme convertisseurs élévateurs et/ou convertisseurs abaisseurs.

6. Convertisseur de tension (1) selon au moins une des revendications précédentes, dans lequel la tension de sortie (U_{A}) est fonction des grandeurs d'entrée.

7. Procédé de conversion de tension, comprenant les étapes :
fourniture d'un premier circuit parallèle d'un premier condensateur (C1) avec un nombre N > 1 de régulateurs commutés en parallèle avec N tensions d'entrée (U₁... Uₙ) et N intensités d'entrée (I₁... Iₙ), dans lequel les régulateurs fonctionnent comme régulateurs d'entrée, **caractérisé par** les étapes :
commutation en série d'un deuxième condensateur (C2) avec le premier circuit parallèle, dans lequel la deuxième tension de condensateur (U_{C2}) est inférieure ou égale à la plus faible tension d'entrée (U₁... Uₙ) des régulateurs, conversion de la différence de tension différentielle des N tensions d'entrée (U₁... Uₙ),
réalisation d'au moins un régulateur comme hacheur deux quadrants de telle sorte que le courant est inversable et au moins un régulateur d'entrée fonctionne comme régulateur de sortie.

8. Procédé de conversion de tension selon la revendication 7, comprenant en outre l'étape de conception des composants du premier circuit parallèle pour la première tension de condensateur (U_{C1} = U_{ZK1} - U_{ZK2}).
